# EUROPEAN PATENT SPECIFICATION

(11) **EP 4 199 510 B1**
(45) Date of publication and mention of the grant of the patent: **25.06.2025**
(21) Application number: 21868656.6
(22) Date of filing: 15.09.2021
(51) Int. Cl.: H04N 13/296, H04N 23/71, H04N 23/661, H04N 23/90, H04N 23/72, H04N 23/60, H04N 25/76

(54) **METHOD AND SYSTEM FOR ALIGNING EXPOSURE CENTRAL POINTS OF MULTIPLE CAMERAS IN VR SYSTEM**
VERFAHREN UND SYSTEM ZUR AUSRICHTUNG VON BELICHTUNGSZENTRALPUNKTEN MEHRERER KAMERAS IN EINEM VR-SYSTEM
PROCÉDÉ ET SYSTÈME D'ALIGNEMENT DE POINTS CENTRAUX D'EXPOSITION DE MULTIPLES CAMÉRAS DANS UN SYSTÈME DE RV

(30) Priority: 16.09.2020 CN 202010973542
(43) Date of publication of application: 21.06.2023
(73) Proprietor: Qingdao Pico Technology Co., Ltd., Qingdao, Shandong 266000 (CN)
(72) Inventor: ZHANG, Xiuzhi, Qingdao, Shandong 266000 (CN); ZHOU, Hongwei, Qingdao, Shandong 266000 (CN); LIU, Guanghui, Qingdao, Shandong 266000 (CN); GUO, Hengjiang, Qingdao, Shandong 266000 (CN)
(74) Representative: Dentons UK and Middle East LLP
(86) International application number: PCT/CN2021/118546
(87) International publication number: WO 2022/057834

(56) References cited:
- CN-A- 107 409 176
- CN-A- 110 612 506
- CN-A- 111 459 279
- CN-A- 111 476 907
- CN-A- 112 203 076
- JP-A- 2009 232 340
- US-A1- 2017 262 045
- US-A1- 2018 309 919
- US-A1- 2019 110 039
- US-A1- 2019 110 039
- US-A1- 2019 114 830
- US-A1- 2019 313 039

## Description

### TECHNICAL FIELD

The invention relates to the field of computer vision, and more particularly, to a method and a system for aligning exposure center points of multiple cameras in a VR system.

### BACKGROUND

In existing All-in-one VR six-degree-of-freedom (6DOF) all-in-one design, most of optical tracking on head-mounted devices is realized by two cameras, and the two cameras have the same configuration parameters. In the automatic exposure design, the two cameras also both have the same exposure parameters, so it is possible for the two cameras to align exposure center points of them. Since two cameras have a blind spot on the Field Of View (FOV), if there is a need for optical handle tracking, the problem of the handle blind spot will be more obvious. To solve this, more cameras need to be added to the tracking system, so existing multiple cameras may be placed in the upper, lower, left and right sections, and it is possible that lights of environments corresponding to individual cameras are different, and each of the cameras needs to be set with different exposure parameters, while setting different exposure parameters makes it difficult to realize the alignment of exposure center points of multiple cameras.

Therefore, there is an urgent need for a method and system capable of realizing the alignment of exposure center points of multiple cameras in a VR system even under different exposure parameters.

US 2019/313039 A1 discloses systems, methods, and devices related to the synchronization of image sensors with different exposure durations. In particular, the system may include multiple image sensors, such as cameras, that have differing exposure durations. A data management component may be configured to receive sensor data from the image sensors. In addition, a synchronization component may be configured to transmit a shutter synchronization pulse to the image sensors. Finally, a tracking component may be configured to temporally center, based at least in part on the shutter synchronization pulse, the differing exposure durations of the image sensors.

JP 2009 232340 discloses an image pickup element suitable to control the reading timing of pixel signals by setting a sleep period of reading processing. The image pickup element includes a read-reset line address generating section for generating a plurality of addresses indicating the position of a line of a sensor cell to be processed on the time division basis during one horizontal scanning period; a driving pulse generator for generating a signal for driving the sensor cell of the selection line: a sensor cell array; and a horizontal transfer section for outputting the read data of the image signal per line. The read-reset line address generating section includes the same number of selection line address generating circuits as the number of time-divisions, and can independently control the generating circuits.

US 2019/309919 A1 discloses an apparatus for capturing images. The apparatus comprises a first image sensor, a second image sensor, and at least one controller coupled to the first image sensor and the second image sensor. The controller is configured to determine a first exposure time of the first image sensor and a second exposure time of the second image sensor. The controller is further configured to control an exposure of the first image sensor according to the first exposure time and control an exposure of the second image sensor according to the second exposure time. The controller also determines a difference between the first and second exposure times and generates a signal for synchronizing image capture by the first and second image sensors based on the determined difference between the first and second exposure times.

### SUMMARY

In view of the above problems, the purpose of the present invention is to provide a method and system for aligning exposure center points of multiple cameras in a VR system, so as to solve the problems that existing VR systems with optical tracking requirements are provided with multiple cameras, which are placed in the upper, lower, left and right sections respectively, so there is a situation that lights of environments corresponds individual cameras are different, and each of the cameras needs to be set with different exposure parameters, while setting different exposure parameters makes it difficult to realize the alignment of exposure center points of multiple cameras.

A method for aligning exposure center points of multiple cameras in a VR system according to claim 1.

Preferably, the preset frame rate is 60Hz.

Preferably, the external object is an external environment or a part of human body.

Preferably, before adjusting VTS data of the first type frames, the method further comprises:
calculating scan time for each line of data according to a Horizontal Timing Size (HTS) setting of the data image and a clock frequency in the VR system, and acquiring a default VTS value for an image sensor in the VR system.

Preferably, the process of adjusting VTS data of the first type frames comprises:
acquiring exposure parameters of the first type frames;
calculating VTS data of the first type frames through the exposure parameters, and writing the VTS data into a register of the image sensor.

Preferably, in the process of the exposure parameters of individual cameras during tracking being dynamically changed according to changes in external objects,
the darker the environment of the external object, the larger the exposure parameter;
the brighter the environment of the external object, the smaller the exposure parameter.

Preferably, in the process of the VTS data being changed as the change of the exposure parameters,
if the exposure parameter increases, the value of the VTS data is increased;
if the exposure parameter is decreased, the value of the VTS data is decreased.

Preferably, adjusting VTS data of images of the second type frames according to the VTS data of the first type frames is to:
cause the sum of the value of the VTS data of the second type frames and the value of the VTS data of the first type frames to be a fixed value.

Preferably, the alignment of center points of the first type frames and the second type frames is realized after the process of fixing the time interval between the exposure center points of the second type frame and the FSIN synchronization signal in the VR system is completed;
the alignments of the center points of the first type frames and the second type frames are completed sequentially and repeatedly during the entire acquisition process of image data acquisition by the VR system, so as to align exposure center points of the cameras in the entire VR tracking process.

The present invention further provides a system for aligning exposure center points of multiple cameras in a VR system according to claim 9.

As know from the above technical solutions, the method and system for aligning exposure center points of multiple cameras in a VR system provided by the present invention, by dividing acquired image data into first type frames and second type frames, then processing the first type frames and the second type frames respectively, the first type frames being used to track external objects, exposure parameters of the cameras during tracking changing dynamically according to changes in external objects, whereby, the VTS data of the first type frame being adjusted, so that the VTS data changing as the change of the exposure parameters, to fix the time interval between exposure center points of the first type frames and a FSIN synchronization signal in the VR system, and the second type frames having the same exposure parameters of the cameras during tracking, whereby, there being fixed time interval between exposure center points of the second type frames and the FSIN synchronization signal in the VR system, so as to complete the alignment of the center points of the first type frames and the second type frames, the alignment of the center points of the first type frames and the second type frames is completed sequentially and repeatedly when acquiring the remaining image data, thus the exposure center points of the cameras during the entire VR tracking are aligned. In this way, even if more cameras are added to meet optical handle tracking requirements and each camera is set with different exposure parameters, the alignment of exposure center points can be completed, so that the entire VR system is enabled to output stably, thereby improving users' comfort and immersion.

### BRIEF DESCRIPTION OF THE DRAWINGS

Other objectives and results of the present invention will be more apparent and readily understood by reference to the following description in conjunction with the accompanying drawings and as the present invention being more fully understood. In the drawings:
FIG. 1 is a flowchart of a method for aligning exposure center points of multiple cameras in a VR system according to an embodiment of the present invention;
FIG. 2 is a schematic diagram of a system for aligning exposure center points of multiple cameras in a VR system according to an embodiment of the present invention.

### DETAILED DESCRIPTION

Existing VR systems with optical tracking requirements are provided with multiple cameras, which are placed in the upper, lower, left and right sections respectively, so there is a situation that lights of environments corresponds individual cameras are different, and each of the cameras needs to be set with different exposure parameters, while setting different exposure parameters makes it difficult to realize the alignment of exposure center points of multiple cameras.

In view of the above problems, the present invention provides a method for aligning exposure center points of multiple cameras in a VR system, and the specific embodiments of the present invention will be described in detail below with reference to the accompanying drawings.

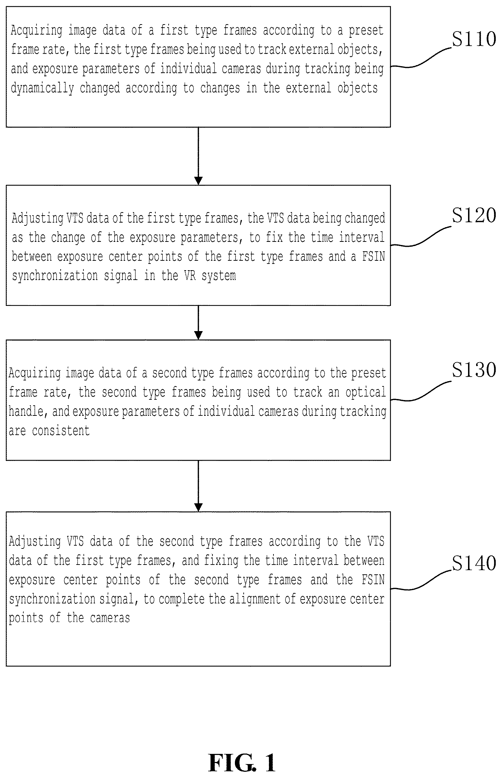

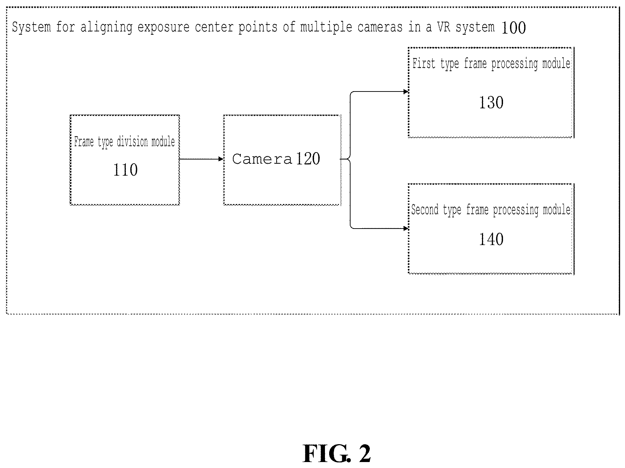

In order to illustrate the method for aligning exposure center points of multiple cameras in a VR system provided by the present invention, FIG. 1 exemplarily illustrates the method for aligning exposure center points of multiple cameras in a VR system according to an embodiment of the present invention; FIG. 2 exemplarily illustrates a system for aligning exposure center points of multi-camera in a VR system according to an embodiment of the present invention.

The following descriptions of exemplary embodiments are merely illustrative in nature and in no way limit the invention, its application or use in any way. Techniques and devices known to those of ordinary skill in the relevant art may not be discussed in detail, but where appropriate, such techniques and devices should be considered part of the specification.

As shown in FIG. 1, a method for aligning exposure center points of multiple cameras in a VR system according to an embodiment of the present invention comprises:
S110: acquiring image data of a first type frames according to a preset frame rate, the first type frames being used to track external objects, and exposure parameters of individual cameras during tracking being dynamically changed according to changes in the external objects;
S120: adjusting VTS data of the first type frames, the VTS data being changed as the change of the exposure parameters, to fix the time interval between exposure center points of the first type frames and a FSIN synchronization signal in the VR system;
S130: acquiring image data of a second type frames according to the preset frame rate, the second type frames being used to track an optical handle, and exposure parameters of individual cameras during tracking are consistent;
S140: adjusting VTS data of the second type frames according to the VTS data of the first type frames, and fixing the time interval between exposure center points of the second type frames and the FSIN synchronization signal in the VR system, to complete the alignment of exposure center points of the cameras.

In the embodiment shown in FIG. 1, in step S110, the preset frame rate is a preset frame rate in advance, which needs to be in conjunction with the frame rate of a camera itself, and the frame rate is an integer multiple of the synchronization frame rate, for example, the synchronization frame rate is 30Hz and the frame rate of the camera is 60Hz. In other words, if the frame rate of the camera is 60Hz, the actual images acquired by the camera can be 30Hz head image and 30Hz hand image respectively. It should be noted that the synchronization frame rate can be 30Hz or 15Hz; if the image data is acquired at 90Hz, the image data can be a 30Hz head image and a 60Hz hand image, and the sequence of combination during acquisition can be a head image, a hand image, and a hand image. There is no specific limitation on the value of the preset frame rate, and in this embodiment, image data is acquired at 60Hz, including the first type frames at 30Hz and the second type frames at 30Hz.

As shown in FIG. 1, in step S110, the first type frames are used to track external objects, which are external environments or parts of human body, that is, the first type frames are images of external environments or parts of human body. If the VR system only acquires external environments and the handle, the external objects are external environments, that is, the first type frames are external environment images. In one specific embodiment, image data is acquired with 60Hz frame rate, and the first frame is acquired from the external environment to form a 30Hz external environment image to realize the Head 6DOF function of the entire VR system. The second frame is acquired from the handle to form a 30Hz handle image to track the optical handle to realize the Hand 6DOF function. At this time, the first type frames refers to the external environment image formed by acquiring the external environment; in another specific embodiment, image data is acquired with 30Hz frame rate to achieve 15Hz synchronization. Specifically, the first frame and the second frame first acquire the head image, and the third frame and the fourth frame acquire the handle image. In this embodiment, the first type frames refers to the acquired head images; no matter how many frames of external object images are acquired first before acquiring the handle images, the first type frames are images of first few frames of external objects, in other words, the first type frames are non-handle images acquired except for tracking the handle, which may be external environment images or images of parts of human body.

As shown in Figure 1, in step S110, exposure parameters of individual cameras during tracking are dynamically changed according to changes in external objects, and the multiple cameras keep working synchronously. Since installation locations of individual cameras are different, external environments corresponding to individual environments are also different. In order to ensure the tracking accuracy and ensure the consistency of outputs of each image in different environments, exposure parameters of each camera also need to be different. The darker the environment where the external objects are located, the larger the exposure parameter; The brighter the environment where the external objects are located, the smaller the exposure parameter, that is, exposure time of a camera with a darker environment is set to be longer, and exposure time of a camera with a brighter environment is set to be shorter. In this case, only when the alignment of exposure center points is achieved, the timing when multiple cameras are acquiring data can be ensured to be consistent, and the multiple cameras will also have the same timestamp.

In the embodiment shown in FIG. 1, before step S120, it is necessary to calculate scan time for each line of data according to a HTS setting of the data image and a clock frequency in the VR system, and acquire a default VTS value for an image sensor in the VR system, and then adjust VTS data of the first type frames, wherein, the process of adjusting VTS data of the first type frames comprises:
S121: acquiring exposure parameters of the first type frames;
S122: calculating VTS data of the first type frames according to the exposure parameters, and writing the VTS data into a register of the image sensor;
The VTS data changes as the change of the exposure parameter. Specifically, if the exposure parameter increases, the value of the VTS data is increased; if the exposure parameter decreases, the value of the VTS data is decreased to fix the time interval between exposure center points of the first type frames and the FSIN synchronization signal in the VR system, so as to ensure that the center points of the multiple cameras are aligned when the multiple cameras acquire image data of the first type frames.

In the embodiment shown in FIG. 1, in step S130, a second type frames are acquired according to a preset frame rate, and image data of the second type frames is used to track the optical handle. In one specific embodiment, image data is acquired with a 60Hz frame rate, and the first frame is acquired from the external environment to form a 30Hz external environment image to realize the Head 6DOF function of the entire VR system. The second frame is acquired from the handle to form a 30Hz handle image to track the optical handle to realize the Hand 6DOF function. At this time, the second type frames refers to the image of the handle formed by tracking the handle; in another specific embodiment, image data is acquired with 30Hz frame rate to achieve 15Hz synchronization. Specifically, the first frame and the second frame first acquire the head image, and the third frame and the fourth frame acquire the handle image. In this embodiment, the second type frames refers to the acquired handle images; no matter how many frames of external objects are acquired before acquiring the handle images, the second type frames are the acquired handle images.

In the embodiment shown in FIG. 1, in step S130, since the brightness of the handle will be brighter than the environment, and at the same time, in order to be able to reduce the image afterglow when the handle moves fast, exposure parameters (exposure times) of individual camera in the process of tracking the optical handle are set to be very small (tens to hundreds of microseconds), and exposure times of multiple cameras are set to be the same parameters, so that the exposure parameters (exposure time) of individual cameras remain consistent during the process of tracking the optical handle. According to the characteristics of the camera, exposure center points of images of the second type frames of multiple cameras are aligned, that is, the time interval between the exposure center points of the images of the second type frames and the FSIN synchronization signal is fixed. Therefore, in step S140, the VTS data of the second type frames is first adjusted according to the VTS data of the first type frames, and the time interval between the exposure center points of the second type frames and the FSIN synchronization signal in the VR system is fixed, so as to complete the alignment of the camera exposure center points.

In the embodiment shown in FIG. 1, in step S140, adjusting VTS data of images of the second type frames according to the VTS data of the first type frames is to: cause the sum of the value of the VTS data of the second type frames and the value of the VTS data of the first type frames to be a fixed value. Only when the sum of the value of the VTS data of the second type frames and the value of the VTS data of the first type frames is always the same value, the image data of two frames of the first type frame and the second type frame can stably output images at a specific frame rate, and realize that the camera can output stably at a preset frame rate, so as to achieve the alignment of center points of the first type frames and the second type frames, and during the entire acquisition process of acquiring image data in the VR system, acquiring sequentially the first type frame, the second type frame, the first type frame, the second type frame... and so on, to realize the entire process of VR tracking, so it is only required y to repeat the process of aligning the center points according to the above first type frame and the second type frame, and sequentially and repeatedly realize the alignment of the center points of the first type frames and the second type frames, the alignment of exposure center points of the cameras in the entire VR tracking process can be realized.

As it can be seen from the above embodiments, the method for aligning exposure center points of multiple cameras in a VR system provided by the present invention, by dividing acquired image data into first type frames and second type frames, then processing the first type frames and the second type frames respectively, the first type frames being used to track external objects, exposure parameters of the cameras during tracking changing dynamically according to changes in external objects, whereby, the VTS data of the first type frame being adjusted, so that the VTS data changing as the change of the exposure parameters, to fix the time interval between exposure center points of the first type frames and a FSIN synchronization signal in the VR system, and the second type frames having exposure parameters of the cameras during tracking being consistent, there being fixed time interval between exposure center points of the second type frames and the FSIN synchronization signal in the VR system may be easily realized, so as to complete the alignment of the center points of the first type frames and the second type frames, the alignment of the center points of the first type frames and the second type frames is completed sequentially and repeatedly when acquiring the remaining image data, thus the exposure center points of the cameras during the entire VR tracking are aligned. In this way, even if more cameras have to be added to meet optical handle tracking requirements and each camera is set with different exposure parameters, the alignment of exposure center points can be completed, so that the entire VR system is enabled to output stably, thereby improving users' comfort and immersion.

As shown in FIG. 2, the present invention also provides a system 100 for aligning exposure center points of multiple cameras in a VR system, characterized in that, for realizing the above method for aligning exposure center points of multiple cameras in a VR system, comprising: a frame type division module 110, a camera 120, a first type frame processing module 130 and a second type frame processing module 140, wherein the frame type division module 110 is used to instruct the camera 120 to sequentially acquire image data of the first type frame and the second type frame, that is, instruct the camera 120 to sequentially acquire external objects and a light-emitting handle, and divide the image data acquired by the camera 120 into the first type frames and the second type frames; the camera 120 is used to acquire image data of external objects or the light-emitting handle according to the instruction from the frame type division module 110, and acquire the image data according to a preset frame rate; the first type frame processing module 130 is used to adjust VTS data of the first type frames, so that the VTS data changes as the change of the exposure parameters, to fix the time interval between exposure center points of the first type frames and a FSIN synchronization signal in the VR system; the second type frame processing module 140 is used to adjust VTS data of the second type frame according to the VTS data of the first type frame data, and fix the time interval between exposure center points of the second type frames and the FSIN synchronization signal in the VR system, so as to complete the alignment of exposure center points of the cameras.

As it can be seen from the above embodiments, in the system for aligning exposure center points of multiple cameras in a VR system provided by the present invention, firstly, the frame type division module instructs the cameras to acquire the first type frames and the second type frames, and the cameras acquire image data of the first type frames and the second type frames according to a preset frame rate, and then VTS data of the first type frames and the second type frames is processed by the first type frame processing module and the second type frame processing module, so that exposure center points of the first type frames and the second type frames are aligned, and the alignment of the center points of the first type frames and the second type frames is completed sequentially and repeatedly when acquiring the remaining image data, thus the exposure center points of the cameras during the entire VR tracking are aligned. In this way, even if more cameras have to be added to meet optical handle tracking requirements and each camera is set with different exposure parameters, the alignment of exposure center points can be completed, so that the entire VR system is enabled to output stably, thereby improving users' comfort and immersion.

The method and system for aligning exposure center points of multiple cameras in a VR system according to the present invention are described above with reference to the accompanying drawings by way of example. However, those skilled in the art should understand that various improvements can also be made to the above method and system for aligning exposure center points of multiple cameras in a VR system proposed by the present invention without departing from the content of the present invention. Therefore, the protection scope of the present invention should be determined by the contents of the appended claims.

## Claims

1. A method for aligning exposure center points of multiple cameras in a VR system comprising:
acquiring (S110), by the multiple cameras working synchronously, image data of a first type frames according to a preset frame rate, the first type frames being used to track external objects, and exposure parameters of the multiple cameras during tracking being dynamically changed according to changes in the external objects;
adjusting (S120) Vertical Timing Size VTS data of the first type frames from a default VTS value, the VTS data being changed according to the dynamic change of the exposure parameters, to fix the time interval between exposure center points of the first type frames and a Frame Synchronization Input FSIN synchronization signal in the VR system;
acquiring (S130), by the multiple cameras working synchronously, image data of a second type frames according to the preset frame rate, the second type frames being used to track an optical handle, and exposure parameters of the multiple cameras during tracking are consistent;
wherein the image data of the first type frames and the image data of the second type frames are acquired sequentially and alternately during an entire acquisition process;
adjusting (S140) VTS data of the second type frames according to the VTS data of the first type frames, and fixing the time interval between exposure center points of the second type frames and the FSIN synchronization signal, to complete the alignment of exposure center points of the multiple cameras,
wherein the adjusting (S140) VTS data of images of the second type frames according to the VTS data of the first type frames comprises causing a sum of the value of the VTS data of the second type frames and the value of the VTS data of the first type frames to be a same fixed value during the entire acquisition process.

2. The method for aligning exposure center points of multiple cameras in a VR system according to claim 1,
the preset frame rate is 60Hz.

3. The method for aligning exposure center points of multiple cameras in a VR system according to claim 2,
the external object is an external environment or a part of human body.

4. The method for aligning exposure center points of multiple cameras in a VR system according to claim 1, before adjusting (S120) VTS data of the first type frames, the method further comprises:
calculating scan time for each line of data according to an Horizontal Timing Size HTS setting of the data image and a clock frequency in the VR system, and acquiring a default VTS value for an image sensor in the VR system.

5. The method for aligning exposure center points of multiple cameras in a VR system according to claim 4, the process of adjusting (S120) VTS data of the first type frames comprises:
acquiring exposure parameters of the first type frames;
calculating VTS data of the first type frames according to the exposure parameters and writing the VTS data into a register of the image sensor.

6. The method for aligning exposure center points of multiple cameras in a VR system according to claim 1, in the process of the exposure parameters of individual cameras during tracking being dynamically changed according to changes in external objects,
the darker the environment of the external object, the larger the exposure parameter;
the brighter the environment of the external object, the smaller the exposure parameter.

7. The method for aligning the exposure center points of multiple cameras in a VR system according to claim 6, in the process of the VTS data being changed as the change of the exposure parameters,
if the exposure parameter increases, the value of the VTS data is increased;
if the exposure parameter is decreased, the value of the VTS data is decreased.

8. The method for aligning the exposure center points of multiple cameras in a VR system according to claim 1,
the alignment of center points of the first type frames and the second type frames is realized after the process of fixing the time interval between the exposure center points of the second type frame and the FSIN synchronization signal in the VR system is completed;
the alignments of the center points of the first type frames and the second type frames are completed sequentially and repeatedly during the entire acquisition process of image data acquisition by the VR system, so as to align exposure center points of the cameras in the entire VR tracking process.

9. A system for aligning exposure center points of multiple cameras in a VR system is used to realize the method for aligning exposure center points of multiple cameras in a VR system according to any of claims 1-9, and comprises:
a frame type division module (110), a camera (120), a first type frame processing module (130) and a second type frame processing module (140), wherein:
the frame type division module (110) is used to instruct the multiple cameras to sequentially acquire first type frames and second type frames;
the multiple cameras (120) are used to work synchronously to sequentially and alternately acquire image data of the first type frame and the second type frame during an entire acquisition process according to the instruction from the type frame division module, and acquire the image data according to a preset frame rate;
wherein the first type frames is used to track external objects, and exposure parameters of the multiple cameras during tracking is dynamically changed according to changes in the external objects, and wherein the second type frames is used to track an optical handle, and exposure parameters of the multiple cameras during the tracking are consistent;
the first type frame processing module (130) is used to adjust Virtual Timing Size VTS data of the first type frames from a default VTS value, the VTS data being changed according to the change of the exposure parameters, to fix the time interval between exposure center points of the first type frames and a Frame Synchronization Input FSIN synchronization signal in the VR system;
the second type frame processing module (140) is used to adjust VTS data of the second type frames according to the VTS data of the first type frames, and fix the time interval between exposure center points of the second type frames and the FSIN synchronization signal, to complete the alignment of exposure center points of the multiple cameras,
wherein the second type frame processing module (140) is further used to: cause a sum of the value of the VTS data of the second type frames and the value of the VTS data of the first type frames to be a same fixed value during the entire acquisition process.

## Patentansprüche

1. Verfahren zum Ausrichten von Belichtungsmittelpunkten mehrerer Kameras in einem VR-System, umfassend:
Erfassen (S110), durch die mehreren synchron arbeitenden Kameras, von Bilddaten eines ersten Typs von Einzelbildern gemäß einer voreingestellten Einzelbildrate, wobei die Einzelbilder des ersten Typs zum Verfolgen externer Objekte verwendet werden und Belichtungsparameter der mehreren Kameras während des Verfolgens gemäß Änderungen der externen Objekte dynamisch geändert werden;
Anpassen (S120) von VTS-Daten (Vertical-Timing-Size-Daten) der Einzelbilder vom ersten Typ von einem VTS-Standardwert, wobei die VTS-Daten gemäß der dynamischen Änderung der Belichtungsparameter geändert werden, um das Zeitintervall zwischen Belichtungsmittelpunkten der Einzelbilder vom ersten Typ und einem FSIN-Synchronisationssignal (Frame-Synchronisation-Input-Synchronisationssignal) in dem VR-System festzulegen;
Erfassen (S130), durch die mehreren synchron arbeitenden Kameras, von Bilddaten eines zweiten Typs von Einzelbildern gemäß der voreingestellten Einzelbildrate, wobei die Einzelbilder vom zweiten Typ zum Verfolgen eines optischen Griffs verwendet werden und Belichtungsparameter der mehreren Kameras während des Verfolgens konsistent sind;
wobei die Bilddaten der Einzelbilder vom ersten Typ und die Bilddaten der Einzelbilder vom zweiten Typ während eines gesamten Erfassungsprozesses nacheinander und abwechselnd erfasst werden;
Anpassen (S140) von VTS-Daten der Einzelbilder vom zweiten Typ gemäß den VTS-Daten der Einzelbilder vom ersten Typ und Festlegen des Zeitintervalls zwischen Belichtungsmittelpunkten der Einzelbilder vom zweiten Typ und dem FSIN-Synchronisierungssignal, um die Ausrichtung von Belichtungsmittelpunkten der mehreren Kameras abzuschließen,
wobei das Anpassen (S140) der VTS-Daten von Bildern der Einzelbilder vom zweiten Typ gemäß den VTS-Daten der Einzelbilder vom ersten Typ umfasst zu veranlassen, dass eine Summe des Werts der VTS-Daten der Einzelbilder vom zweiten Typ und des Werts der VTS-Daten der Einzelbilder vom ersten Typ während des gesamten Erfassungsprozesses einen gleichen festen Wert aufweist.

2. Verfahren zum Ausrichten von Belichtungsmittelpunkten mehrerer Kameras in einem VR-System nach Anspruch 1,
wobei die voreingestellte Bildrate 60Hz beträgt.

3. Verfahren zum Ausrichten von Belichtungsmittelpunkten mehrerer Kameras in einem VR-System nach Anspruch 2,
wobei das externe Objekt eine äußere Umgebung oder ein Teil des menschlichen Körpers ist.

4. Verfahren zum Ausrichten von Belichtungsmittelpunkten mehrerer Kameras in einem VR-System nach Anspruch 1, wobei das Verfahren vor Anpassen (S120) von VTS-Daten der Einzelbilder vom ersten Typ weiter Folgendes umfasst:
Berechnen der Abtastzeit für jede Datenzeile gemäß einer HTS-Einstellung (Horizontal-Timing-Size-Einstellung) des Datenbilds und einer Taktfrequenz in dem VR-System, und Abrufen eines VTS-Standardwerts für einen Bildsensor in dem VR-System.

5. Verfahren zum Ausrichten von Belichtungsmittelpunkten mehrerer Kameras in einem VR-System nach Anspruch 4, wobei der Prozess zum Anpassen (S120) von VTS-Daten der Einzelbilder vom ersten Typ Folgendes umfasst:
Erfassen von Belichtungsparametern der Einzelbilder vom ersten Typ;
Berechnen von VTS-Daten der Einzelbilder vom ersten Typ gemäß den Belichtungsparametern, und Schreiben der VTS-Daten in ein Register des Bildsensors.

6. Verfahren zum Ausrichten von Belichtungsmittelpunkten mehrerer Kameras in einem VR-System nach Anspruch 1, wobei die Belichtungsparameter einzelner Kameras während des Verfolgens gemäß Änderungen externer Objekte dynamisch geändert werden,
je dunkler die Umgebung des externen Objekts ist, desto größer ist der Belichtungsparameter;
je heller die Umgebung des externen Objekts ist, desto kleiner ist der Belichtungsparameter.

7. Verfahren zum Ausrichten von Belichtungsmittelpunkten mehrerer Kameras in einem VR-System nach Anspruch 6, wobei in dem Prozess zum Ändern der VTS-Daten bei der Änderung der Belichtungsparameter,
wenn der Belichtungsparameter ansteigt, der Wert der VTS-Daten erhöht wird;
wenn der Belichtungsparameter verringert wird, der Wert der VTS-Daten verringert wird.

8. Verfahren zum Ausrichten der Belichtungsmittelpunkte mehrerer Kameras in einem VR-System nach Anspruch 1,
wobei die Ausrichtung von Mittelpunkten der Einzelbilder vom ersten Typ und der Einzelbilder vom zweiten Typ realisiert wird, nachdem der Prozess zum Festlegen des Zeitintervalls zwischen den Belichtungsmittelpunkten des Einzelbilds vom zweiten Typ und dem FSIN-Synchronisierungssignal in dem VR-System abgeschlossen ist;
die Ausrichtungen der Mittelpunkte der Einzelbilder vom ersten Typ und der Einzelbilder vom zweiten Typ während des gesamten Erfassungsprozesses zur Bilddatenerfassung durch das VR-System nacheinander und wiederholt durchgeführt werden, um Belichtungsmittelpunkte der Kameras in dem gesamten VR-Verfolgungsprozess auszurichten.

9. System zum Ausrichten von Belichtungsmittelpunkten mehrerer Kameras in einem VR-System, das verwendet wird, um das Verfahren zum Ausrichten von Belichtungsmittelpunkten mehrerer Kameras in einem VR-System nach einem der Ansprüche 1-9 umzusetzen, und Folgendes umfasst:
ein Einzelbildtyp-Unterteilungsmodul (110), eine Kamera (120), ein Verarbeitungsmodul (130) für Einzelbilder vom ersten Typ und ein Verarbeitungsmodul (140) für Einzelbilder vom zweiten Typ, wobei:
das Einzelbildtyp-Unterteilungsmodul (110) verwendet wird, um die mehreren Kameras anzuweisen, nacheinander Einzelbilder vom ersten Typ und Einzelbilder vom zweiten Typ zu erfassen;
die mehreren Kameras (120) verwendet werden, um synchron zu arbeiten, um während eines gesamten Erfassungsprozesses gemäß der Anweisung des Einzelbild-Unterteilungsmoduls nacheinander und abwechselnd Bilddaten des Einzelbilds vom ersten Typ und des Einzelbilds vom zweiten Typ zu erfassen, und die Bilddaten gemäß einer voreingestellten Bildrate zu erfassen;
wobei die Einzelbilder vom ersten Typ zum Verfolgen externer Objekte verwendet werden und Belichtungsparameter der mehreren Kameras während des Verfolgens dynamisch gemäß Änderungen der externen Objekte geändert werden, und wobei die Einzelbilder vom zweiten Typ zum Verfolgen eines optischen Griffs verwendet werden und Belichtungsparameter der mehreren Kameras während des Verfolgens konsistent sind;
das Verarbeitungsmodul (130) für Einzelbilder vom ersten Typ zum Anpassen von VTS-Daten (Virtual-Timing-Size-Daten) der Einzelbilder vom ersten Typ von einem VTS-Standardwert verwendet wird, wobei die VTS-Daten gemäß der Änderung der Belichtungsparameter geändert werden, um das Zeitintervall zwischen Belichtungsmittelpunkten der Einzelbilder vom ersten Typ und einem FSIN-Synchronisationssignal (Frame-Synchronisation-Input-Synchronisationssignal) in dem VR-System festzulegen;
das Verarbeitungsmodul (140) für Einzelbilder vom zweiten Typ zum Anpassen von VTS-Daten der Einzelbilder vom zweiten Typ gemäß den VTS-Daten der Einzelbilder vom ersten Typ und Festlegen des Zeitintervalls zwischen Belichtungsmittelpunkten der Einzelbilder vom zweiten Typ und dem FSIN-Synchronisierungssignal verwendet wird, um die Ausrichtung von Belichtungsmittelpunkten der mehreren Kameras abzuschließen,
wobei das Verarbeitungsmodul (140) für Einzelbilder vom zweiten Typ weiter für Folgendes verwendet wird: Veranlassen einer Summe des Werts der VTS-Daten der Einzelbilder vom zweiten Typ und des Werts der VTS-Daten der Einzelbilder vom ersten Typ während des gesamten Erfassungsprozesses einen gleichen festen Wert aufzuweisen.

## Revendications

1. Procédé d'alignement des points centraux d'exposition de multiples caméras dans un système VR comprenant :
l'acquisition (S110), par les multiples caméras fonctionnant de manière synchrone, de données d'image de trames d'un premier selon une fréquence d'images prédéfinie, les trames de premier type étant utilisées pour suivre des objets externes, et les paramètres d'exposition des multiples caméras pendant le suivi étant modifiés dynamiquement en fonction de changements dans les objets externes ;
le réglage (S120) de données de taille de synchronisation verticale VTS des trames de premier type à partir d'une valeur VTS par défaut, les données VTS étant modifiées en fonction de la modification dynamique des paramètres d'exposition, pour fixer l'intervalle de temps entre les points centraux d'exposition des trames de premier type et un signal de synchronisation d'entrée de synchronisation de trame FSIN dans le système VR ;
l'acquisition (S130), par les multiples caméras fonctionnant de manière synchrone, de données d'image de trames d'un second type selon la fréquence d'images prédéfinie, les trames de second type étant utilisées pour suivre une poignée optique, et les paramètres d'exposition des multiples caméras pendant le suivi sont cohérents ;
dans lequel les données d'image des trames de premier type et les données d'image des trames de second type sont acquises séquentiellement et alternativement tout au long d'un processus d'acquisition ;
le réglage (S140) des données VTS des trames de second type en fonction des données VTS des trames de premier type, et la fixation de l'intervalle de temps entre les points centraux d'exposition des trames de second type et le signal de synchronisation FSIN, pour achever l'alignement des points centraux d'exposition des multiples caméras,
dans lequel le réglage (S140) des données VTS des images des trames de second type en fonction des données VTS des trames de premier type comprend le fait d'amener une somme de la valeur des données VTS des trames de second type et de la valeur des données VTS des trames de premier type à prendre une même valeur fixe tout au long du processus d'acquisition.

2. Procédé d'alignement des points centraux d'exposition de multiples caméras dans un système VR selon la revendication 1,
la fréquence d'images prédéfinie est de 60 Hz.

3. Procédé d'alignement des points centraux d'exposition de multiples caméras dans un système VR selon la revendication 2,
l'objet externe est un environnement externe ou une partie d'un corps humain.

4. Procédé d'alignement des points centraux d'exposition de multiples caméras dans un système VR selon la revendication 1, avant de régler (S120) les données VTS des trames de premier type, le procédé comprend en outre :
le calcul du temps de balayage pour chaque ligne de données en fonction d'un paramètre de taille de synchronisation horizontale HTS de l'image de données et d'une fréquence d'horloge dans le système VR, et l'acquisition d'une valeur VTS par défaut pour un capteur d'image dans le système VR.

5. Procédé d'alignement des points centraux d'exposition de multiples caméras dans un système VR selon la revendication 4, le processus de réglage (S120) des données VTS des trames de premier type comprend :
l'acquisition de paramètres d'exposition des trames de premier type ;
le calcul des données VTS des trames de premier type en fonction des paramètres d'exposition et l'écriture des données VTS dans un registre du capteur d'image.

6. Procédé d'alignement des points centraux d'exposition de multiples caméras dans un système VR selon la revendication 1, au cours du processus de modification dynamique des paramètres d'exposition des caméras individuelles pendant le suivi en fonction de changements dans les objets externes,
plus l'environnement de l'objet externe est sombre, plus le paramètre d'exposition est grand ;
plus l'environnement de l'objet externe est lumineux, plus le paramètre d'exposition est petit.

7. Procédé d'alignement des points centraux d'exposition de multiples caméras dans un système VR selon la revendication 6, au cours du processus de modification des données VTS en fonction de la modification des paramètres d'exposition,
si le paramètre d'exposition augmente, la valeur des données VTS est augmentée ;
si le paramètre d'exposition est diminué, la valeur des données VTS est diminuée.

8. Procédé d'alignement des points centraux d'exposition de multiples caméras dans un système VR selon la revendication 1,
l'alignement des points centraux des trames de premier type et des trames de second type est réalisé une fois le processus de fixation de l'intervalle de temps entre les points centraux d'exposition de la trame de second type et le signal de synchronisation FSIN dans le système VR achevé ;
les alignements des points centraux des trames de premier type et des trames de second type sont effectués de manière séquentielle et répétée tout au long du processus d'acquisition des données d'image par le système VR, de manière à aligner les points centraux d'exposition des caméras dans l'ensemble du processus de suivi VR.

9. Système d'alignement des points centraux d'exposition de multiples caméras dans un système VR utilisé pour mettre en œuvre le procédé d'alignement des points centraux d'exposition de multiples caméras dans un système VR selon l'une quelconque des revendications 1-9, et comprenant :
un module de division par type de trame (110), une caméra (120), un module de traitement de trames de premier type (130) et un module de traitement de trames de second type (140), dans lequel :
le module de division par type de trame (110) est utilisé pour ordonner aux multiples caméras d'acquérir séquentiellement des trames de premier type et des trames de second type ;
les multiples caméras (120) sont utilisées pour fonctionner de manière synchrone afin d'acquérir séquentiellement et alternativement des données d'image de la trame de premier type et de la trame de second type tout au long d'un processus d'acquisition selon l'instruction provenant du module de division par trame de type, et acquérir les données d'image selon une fréquence d'images prédéfinie ;
dans lequel les trames de premier type sont utilisées pour suivre des objets externes, et les paramètres d'exposition des multiples caméras pendant le suivi sont modifiés dynamiquement en fonction des changements dans les objets externes, et dans lequel les trames de second type sont utilisées pour suivre une poignée optique, et les paramètres d'exposition des multiples caméras pendant le suivi sont cohérents ;
le module de traitement de trames de premier type (130) est utilisé pour régler des données de taille de synchronisation virtuelle VTS des trames de premier type à partir d'une valeur VTS par défaut, les données VTS étant modifiées en fonction de la modification des paramètres d'exposition, pour fixer l'intervalle de temps entre les points centraux d'exposition des trames de premier type et un signal de synchronisation d'entrée de synchronisation de trame FSIN dans le système VR ;
le module de traitement de trames de second type (140) est utilisé pour régler des données VTS des trames de second type en fonction des données VTS des trames de premier type, et fixer l'intervalle de temps entre les points centraux d'exposition des trames de second type et le signal de synchronisation FSIN, pour achever l'alignement des points centraux d'exposition des multiples caméras,
dans lequel le module de traitement de trames de second type (140) est en outre utilisé pour : amener une somme de la valeur des données VTS des trames de second type et de la valeur des données VTS des trames de premier type à prendre une même valeur fixe tout au long du processus d'acquisition.
